Europäisches Patentamt

(19) European Patent Office

Office européen des brevets

(11) Veröffentlichungsnummer: **0 253 305 B1**

(12) **EUROPÄISCHE PATENTSCHRIFT**

(45) Veröffentlichungstag der Patentschrift:
22.11.90

(51) Int. Cl.⁵: **C01B 13/11**, B01J 19/08, H01T 19/00, C02F 1/78

(21) Anmeldenummer: 87109897.6

(22) Anmeldetag: 09.07.87

(54) Hochfrequenzozonisator.

(30) Priorität: 10.07.86 DE 3623225

(43) Veröffentlichungstag der Anmeldung:
20.01.88 Patentblatt 88/3

(45) Bekanntmachung des Hinweises auf die Patenterteilung:
22.11.90 Patentblatt 90/47

(84) Benannte Vertragsstaaten:
AT BE CH DE FR GB GR IT LI LU NL SE

(56) Entgegenhaltungen:
EP-A- 0 194 539

CHEMICAL ABSTRACTS, Band 90, Nr. 12, 19. März 1979,
Seite 112, Zusammenfassung Nr. 78 33 316 (KAMIKI,
TERUO; URAGAMI RIKO K.K.) 13-09-1978

(73) Patentinhaber: E.M. Heinkel KG, Nürtinger Strasse 87,
D-7441 Grossbettlingen(DE)

(72) Erfinder: Schmiga, Hubert, Liegnitzerstrasse 37,
D-7015 Korntal-Münchingen 1(DE)
Erfinder: Wagner, Klaus, Ahornweg 2,
D-7447 Aichtal(DE)

(74) Vertreter: Thul, Leo, Dipl.-Phys. et al, Patentanwälte
Schuster & Thul Wiederholdstrasse 10,
D-7000 Stuttgart 1(DE)

**Beschreibung**

Die Erfindung betrifft einen Hochfrequenzozonisator zur Ozonisierung von Luft oder Sauerstoff und zur Entkeimung von Wasser.

Ozonisatoren, insbesondere der "Siemenssche Ozonisator" sind schon sehr lange bekannt. Hierbei nutzt man die Entladung zwischen zwei mit Dielektrikum abgedeckten Elektroden aus, die bei angelegtem hochgespanntem Wechselstrom entsteht. Die Elektroden können hierbei plattenförmig oder rohrförmig sein.

Im Laufe der Jahre sind eine Vielzahl von Vorschlägen gemacht worden, um einerseits den Energieverbrauch günstiger und die Ozonausbeute wirtschaftlicher zu machen. Als vorteilhaft haben sich Ozonisatoren erwiesen, die von einem Hochspannungs-Impulsgenerator angesteuert werden, und die aus einem Gasentladungsrohr mit zwei rohrförmigen, koaxial angeordneten Elektroden, deren eine mit Masse und deren andere mit der Hochspannung verbunden ist, bestehen (vgl. z.B. US-PS 4 234 800).

Es ist nun bekannt, daß die Ozonausbeute mit der angelegten Frequenz steigt; es ist aber auch bekannt, daß die Wärmeverluste ebenfalls mit der Frequenz ansteigen. Bei der Erzeugung von Ozon mittels stiller Entladung kommt es nämlich zu starker Erhitzung der Luft bzw. des Sauerstoffs in der Entladungsstrecke. Mit zunehmender Erhitzung der Entladungsstrecke nimmt die Ozonerzeugung aber bei steigender Energiezufuhr ab. Daraus ergibt sich, daß der Kosten-Nutzen-Effekt bei der Ozonerzeugung hauptsächlich durch Verminderung des Wärmeproblems günstig beeinflußt werden kann. Die üblichen, mit 50 Hz betriebenen Ozongeneratoren benötigen zu einer zufriedenstellenden Ozonausbeute eine sehr hohe Betriebsspannung (15 - 30 KV) und große Gefäße mit einem entsprechend aufwendigen Kühlsystem. Dies ist jedoch wirtschaftlich und technisch nicht mehr vertretbar bei kleineren und mittleren Anlagen, die beispielsweise bei Schwimmbädern oder Trinkwasseraufbereitungsanlagen eingesetzt werden sollen.

Man hat hierfür Hochfrequenzozonisatoren entwickelt, die meistens mit Impulsen angesteuert werden. Die Entladungsgefäße können dann klein sein, während die Betriebsspannung bei 3-4 KV liegt. Das Wärme- bzw. das Kühlproblem bleibt aber bei allen Ozonisatoren bestehen, um eine günstige Energiebilanz zu erreichen (vgl. z.B. EP-Offenlegung 0088 973, DE-PS 22 40 986, DE-PS 44 978). Das Energieproblem und damit die Vermeidung großer Wärme bei hinreichend guter Ozonausbeute wird aber noch dort verschärft, wo nicht beliebig viel Energie zur Verfügung steht, z.B. wenn man die Energie aus Solarbatterien gewinnt.

Zur Lösung des Wärmeproblems ist es daher auch schon vorgeschlagen worden, die innere Elektrode nicht rohrförmig sondern als massiven Metallzylinder auszubilden und diesen Zylinder formschlüssig mit dem metallischen Endstück zu verbinden, das seinerseits mit Masse verbunden ist. Die gut wärmeleitende Masseelektrode saugt nämlich die entstehende Wärme nach außen auf die Gehäuseoberfläche und unterstützt damit die Kühlwirkung der durchströmenden Luft bzw. des Sauerstoffs. Die als Hochspannungselektrode dienende, auf dem dielektrischen Entladungsrohr aufgedampfte Aluminiumsschicht bewirkt eine Verteilung der Oberflächenwärme auf die gesamte Länge des Entladungsrohres, wenn diese Schicht so lang ist wie das Entladungsrohr. Ferner strahlt die nach innen wirkende Verspiegelung die Wärme auf die durchströmende Luft. Man erhält damit also eine sehr gute Wärmeabführung, ohne besondere Kühlsysteme verwenden zu müssen, und damit eine gute Energiebilanz.

Ein anderer Vorschlag geht nun dahin, anstelle der Innenelektrode das zu reinigende bzw. zu entkeimende Wasser selbst zu benutzen. Dies bedeutet dann, daß man zwei konzentrische dielektrische Röhren (Glasröhren) benötigt, zwischen denen die zu ozonisierende Luft ohne Verbindung mit dem Wasser ein- und ausströmen kann. Die Entladung findet zwischen der auf der äußeren Glasröhre aufgebrachten Metallschicht und dem Wasser als Masseelektrode statt, da der Abstand zwischen beiden Elektroden hinreichend klein gehalten werden kann. Bei dieser Vorrichtung nutzt man die Tatsache aus, daß bei der Koronaentladung UV-Strahlung im Bereich von 100 bis 400 nm entsteht.

UV-Strahlung zwischen 100 und 200 nm wirkt ozonbildend, so daß die Luft in dem Doppelrohr noch zusätzlich ozonisiert wird. Ferner wird das Wasser durch die UV-Strahlung im Bereich 200 bis 400 nm entkeimt. Dem somit schon entkeimten Wasser wird das erzeugte Ozon zur weiteren Aufbereitung zugefügt. Problematisch ist bei dieser Vorrichtung die Isolierung nach außen der Hochspannungselektrode. Eine weitere Schwierigkeit bei allen bekannten Ozonisatoren besteht darin, daß extrem trockene Luft verwendet werden muß, was eine Lufttrockenanlage erforderlich macht, die in Größe und Kosten dem eigentlichen Ozonisator gleichkommt.

Die Erfindung betrifft nun einen Ozonisator der zuletzt genannten Art, bei dem die vorstehend erwähnten Probleme und Schwierigkeiten nicht auftreten und der auch noch eine Reihe weiterer Vorteile aufweist. Der Grundgedanke der Erfindung ergibt sich aus dem Patentanspruch 1, der von den Merkmalen der Unteransprüche noch vorteilhaft weiter gebildet ist.

Die Erfindung bringt eine Reihe von wesentlichen Vorteilen. So ist der Aufbau der Ozonisatoren sehr einfach und wartungsfreundlich, da insbesondere keine komplizierten Dichtungsvorrichtungen erforderlich sind. Sehr vorteilhaft ist auch, daß an die Trockenheit der zu ozonisierenden Luft praktisch keine Anforderungen gestellt werden, so daß auch keine teuren Trockenanlagen wie bei den bisher bekannten Ozonisatoren erforderlich sind. Ferner ist die elektrische Isolierung der Hochspannung führenden Elektroden nach außen sehr einfach möglich. Insgesamt ergibt sich durch diese Vorteile eine optimale Ozonausbeute.

Weitere Vorteile und Einzelheiten ergeben sich aus den Unteransprüchen und der folgenden Beschreibung von Ausführungsbeispielen. Es zeigen:

Fig. 1 ein erstes Ausführungsbeispiel mit Wasserkühlung,

Fig. 2 ein zweites Ausführungsbeispiel mit Luftkühlung,

Fig. 3 eine Halbschale des Kühlkörpers der Fig. 3,

Fig. 4 ein drittes Ausführungsbeispiel,

Fig. 5,6 ein weiteres Ausführungsbeispiel,

Fig. 7 ein weiteres Ausführungsbeispiel,

Fig. 8 schematisch eine gesamte Ozonisierungs- und Entkeimungsanlage unter Verwendung der Erfindung.

In der folgenden Beschreibung der Ausführungsbeispiele sind alle diejenigen Einzelheiten weggelassen, die für das Verständnis der Erfindung entbehrlich sind; insbesonders sind die elektrischen Schaltungsteile nicht dargestellt, da hierfür an sich bekannte Mittel vorhanden sind.

In der älteren Anmeldung (P 35 07 885) ist bereits ein Ozonisator der vorliegenden Gattung beschrieben, bei dem Wasser zur Kühlung und das Kühlwasser als Elektrode, vorzugsweise als Masseelektrode verwendet wird.

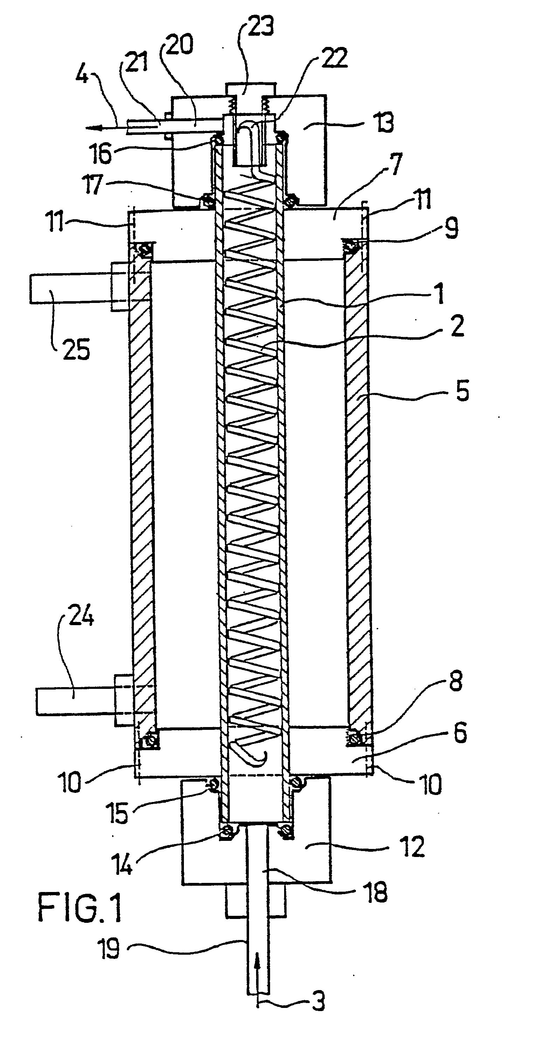

In den meisten Anwendungsfällen ist es nämlich zweckmäßig, Wasser als Kühlmittel zu verwenden. Fig. 1 zeigt einen derartigen Ozonisator mit den Merkmalen der Erfindung. In der aus Quarzglas bestehenden Röhre 1 von ca. 2,5 mm Wandstärke, ist die festanliegende Spirale 2 aus Edelstahl als Hochspannungselektrode angeordnet. Die zu ozonisierende Luft wird in Richtung der Pfeile 3 und 4 durch die Röhre 1 geleitet. Die Röhre 1 ist von der konzentrischen, metallischen Röhre 5 umgeben, die mit Masse verbunden ist. Die äußere Metallröhre 5 ist durch die beiden Deckel 6 und 7 aus leitendem Material über die O-Ringe 8 und 9 wasserdicht abgedichtet, wobei die Deckel 6 und 7 durch eine geeignete Anzahl von Schrauben 10 und 11 fest mit der Röhre 5 verschraubt sind. Die Deckel 6 und 7 enthalten kreisrunde Durchlassöffnungen für die Glasröhre 1. Dies ermöglicht eine einfache und saubere Abdichtung der Röhre 1 nach außen.

Über die Enden der Röhre 1 sind die elektrisch nichtleitenden Kappen 12 und 13 gestülpt, die mit den Deckeln 6 und 7 verschraubt sind; die Abdichtung erfolgt über die O-Ringe 14 und 15 bzw. 16 und 17. Die Kappe 12 hat eine Durchführung 18 für die zu ozonisierende Luft, die über den an der Kappe 12 befestigten Stutzen 19 zugeführt wird. Die Kappe 13 weist eine Durchführung 20 auf, über die die ozonisierte Luft dem an der Kappe 13 befestigten Stutzen 21 zugeführt wird.

Die Spirale 2 ist selbstklemmend mit unten offenem Ende in die Glasröhre 1 gesteckt; das obere Ende 22 der Spirale 2 ist in die Hohlschraube 23 eingesteckt; letztere ist mit der Hochspannung verbunden.

Das Kühlwasser gelangt über den Einlaufstutzen 24 in die Röhre 1 und fließt über den Auslaufstutzen 25 wieder ab. Das Wasser dient gleichzeitig als Hochspannungselektrode mit Massepotential, da es mit der Metallröhre 5 Kontakt hat.

Beim Anlegen der hochfrequenten Hochspannung entsteht UV-Strahlung, die sich nach allen Seiten ausbreitet, also auch durch das Quarzglas in das Kühlwasser eindringt. Hierdurch wird einmal die durch die Röhre 1 strömende Luft, die nicht trocken zu sein braucht, ozonisiert und zum anderen wird das Kühlwasser sowohl ozonisiert als auch entkeimt. Es ist daher vorteilhaft, das Kühlwasser von dem zu reinigenden Wasser abzuleiten.

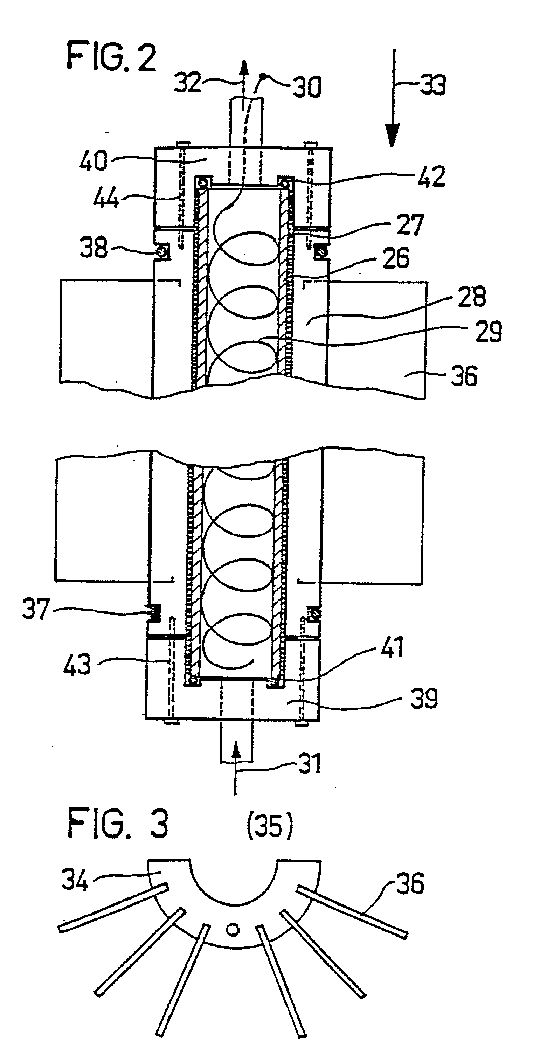

Fig. 2 zeigt ein anderes Ausführungsbeispiel, bei dem anstelle von Wasser Luft als Kühlmittel verwendet wird. Da es hierbei nur erforderlich ist, die Unterschiede gegenüber dem ersten Ausführungsbeispiel zu erläutern, sind auch nur diese dargestellt.

Der Ozonisator besteht aus der für UV-Strahlung durchlässigen Röhre 26, als Material eignet sich auch hier insbesondere Quarzglas. Auf die Röhre 26 ist eine metallische Schicht 27, vorzugsweise eine Aluminiumschicht aufgebracht, die an Masse liegt. Über die Schicht 27 ist fest aufliegend der Kühlkörper 28 geschoben, der aus zwei identischen Halbschalen besteht, um die Montage zu vereinfachen, wie anhand der Fig. 3 noch erläutert wird. In die Röhre 26 ist die metallische Spirale 29 selbstklemmend eingesteckt; die Spirale 29 besteht vorzugsweise aus Edelstahl.

Sie ist am oberen Ende über den Anschluß 30 mit der Hochspannung von ca. 2000 V und einer Frequenz von 10 - 20 KHz verbunden. Dieser Anschluß kann wie in Fig. 1 ausgebildet sein.

In die Röhre 26 wird von unten Luft eingeführt, wie durch den Pfeil 31 angedeutet ist, die am oberen Ende ozonisiert austritt, was der Pfeil 32 veranschaulicht.

Die Spirale 29 dient wieder als Hochspannungselektrode und die Aluminiumschicht 27 bzw. der Kühlkörper 28 als Masseelektrode. Wenn nun die Hochspannung angelegt wird, entsteht im Innern der Röhre 26 UV-Strahlung von 100 - 350 nm, die nach außen durch die Aluminiumschicht 27 abgeschirmt wird.

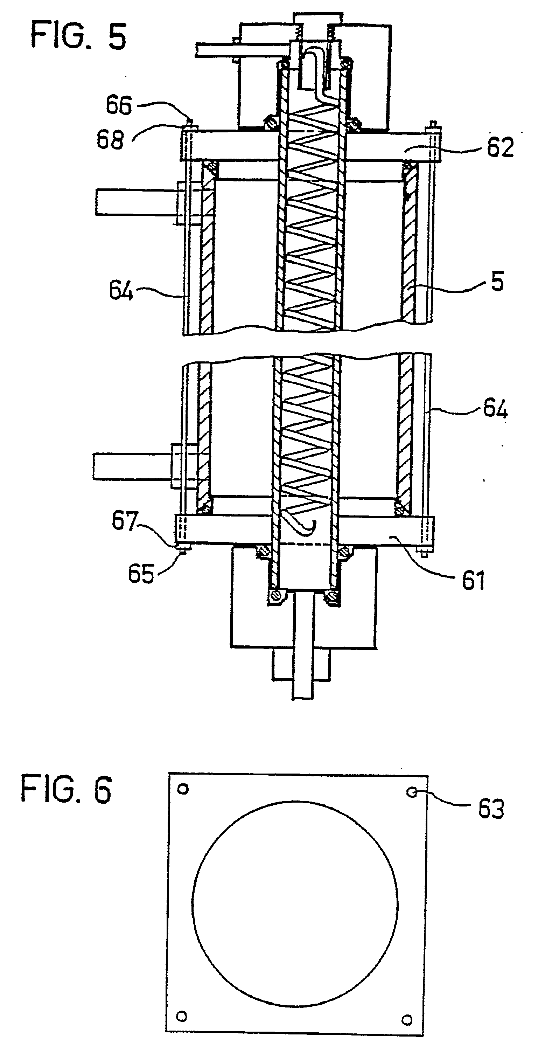

Die UV-Strahlung hat nun bekanntlich die Wirkung, daß sie im Bereich von 100 bis 200 nm die Luft ozonisiert. Die in dem vorliegenden Ausführungsbeispiel von unten zugeführte Luft tritt daher oben ozonisiert aus und kann dann zur Behandlung von z.B. Wasser verwendet werden, was weiter unten anhand der Fig. 5 noch näher erläutert wird.

Bei der Entladung zwischen den beiden Elektroden entsteht bekanntlich Wärme, die in den meisten bekannten Ozonisatoren ein Hauptproblem darstellt. Bei dem einfachen Aufbau des neuen Ozonisators läßt sich auch dieses Problem einfach und erfolgreich mittels eines Kühlkörpers lösen.

Der Aufbau des Kühlkörpers 28 ergibt sich aus der Fig 3, die eine Sicht in Richtung des Pfeils 33 der Fig. 2 zeigt. Danach besteht der Kühlkörper aus zwei identischen Halbschalen 34 und 35 mit den Kühllamellen 36. Die beiden Halbschalen 34 und 35 sind nicht miteinander verschraubt, sondern oben und unten durch federnde Klemmringe, z.B. die O-Ringe 37 und 38 (Fig. 1) miteinander verbunden, so daß auch ein guter Wärmekontakt zwischen der Aluminiumschicht 27 und dem Kühlkörper 34,35 hergestellt ist.

Der Abschluß der Röhre 26 ist mit den beiden Kappen 39 und 40 schematisch dargestellt, wobei auch hier die Abdichtung mittels den O-Ringen 41 und 42 erfolgen kann. Schließlich können die Kappen 39 und 40 durch Schrauben 43 und 44 mit dem Kühlkörper verschraubt sein.

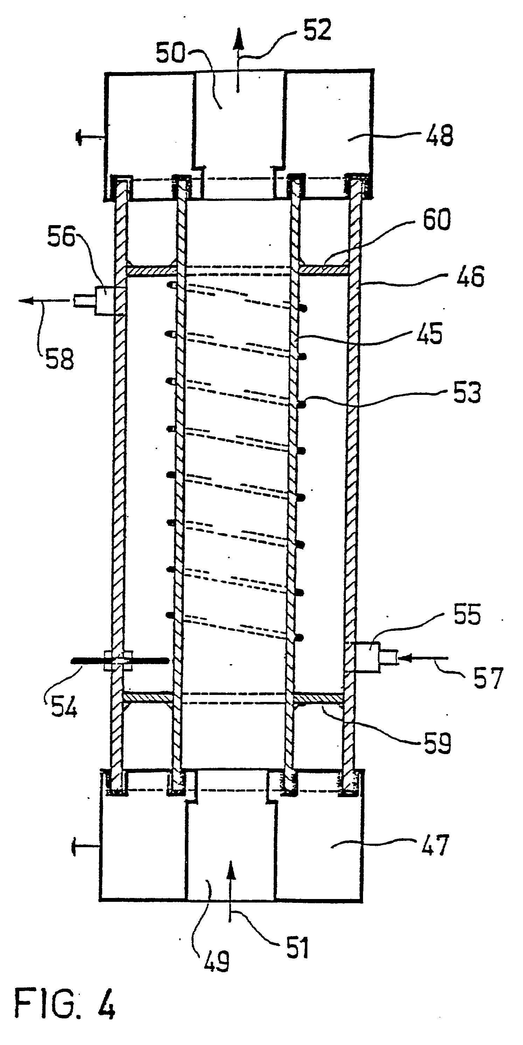

Im Rahmen des erfinderischen Prinzips, nämlich der Ausnutzung der UV-Strahlung, liegt es, wenn die Hochspannungsspirale nicht innerhalb der inneren Röhre angeordnet, sondern über die innere Röhre gestülpt ist und das Kühlwasser als Masseelektrode durch die innere Röhre geleitet wird und die zu ozonisierende Luft zwischen den beiden Röhren strömt. Dies wird anhand der Fig. 4 näher erläutert.

Der Ozonisator besteht aus den beiden konzentrischen, elektrisch nicht leitenden Röhren 45 und 46; die innere Röhre 45 ist aus Quarzglas, während die äußere Röhre 46 aus normalem Glas bestehen kann. Die Röhren 45 und 46 sind gegeneinander hermetisch abgeschlossen, indem sie dicht in die Endstücke 47 und 48 eingelassen sind; die Endstücke 47 und 48 sind aus Metall, vorzugsweise aus Edelstahl, und sind mit Masse verbunden. Beide Endstücke haben ferner Kanäle 49 und 50, durch die das Wasser in die innere Röhre 45 ein bzw. aus ihr ausströmen kann, wie durch die Pfeile 51 und 52 angedeutet ist.

Die Röhre 46 ist außen mit Aluminium beschichtet, das mit Masse verbunden ist. An beiden Enden der Doppelröhre sind ferner die Scheiben 59 und 60 in einem gewissen Abstand von den Endstücken 47 und 48 angeordnet, und zwar sind sie luftdicht mit den Wandungen der Röhren 45 und 46 verbunden. Die Scheiben 59 und 60 haben den Zweck, einen Isolierabstand zwischen den beiden Elektroden zu schaffen und auch das Eindringen von Feuchtigkeit in den Luftraum zusätzlich zu verhindern. Die Stutzen 55 und 56 bestehen aus Kunststoff und sind auf die Röhre 46 aufgeklebt.

Es wird nun die Wirkungsweise dieser Vorrichtung beschrieben.

Die zu ozonisierende Luft wird über den Einlaufstutzen 55 zwischen die beiden Röhren 45 und 46 geleitet. Wenn nun die Hochspannung an die Spirale 53 angelegt wird und das Kühlwasser als Masseelektrode durch die innere Röhre 45 geleitet wird, entsteht UV-Strahlung, die sich nach allen Seiten ausbreitet, die also sowohl in das Kühlwasser als auch in die Luft zwischen den beiden Röhren eindringt und dort die geschilderten Wirkungen erzielt. Das Wasser wird durch die UV-Strahlung entkeimt; ferner wird der evtl. vorhandene freie Sauerstoff ozonisiert. Die Luft wird durch die UV-Strahlung ozonisiert und tritt über den Auslaßstutzen 56 aus, um dann der beabsichtigten Verwendung zugeführt zu werden, z.B. zur Reinigung von Wasser eines Schwimmbeckens.

Fig. 5 zeigt ein abgeändertes Beispiel der Fig. 1, das sich von diesem nur in der Befestigung der beiden Deckel 6 und 7 an der äußeren Röhre 5 unterscheidet. Es wird daher auch nur dieser Unterschied beschrieben. Wie Fig. 6 zeigt sind die abgeänderten Deckel 61 und 62 quadratisch; dabei reichen die Ränder dieser Deckel über den Umfang der Röhre 5 hinaus. In den vier Ecken der Deckel 61 und 62 sind Löcher 63 vorgesehen durch die die Stangen 64 durchgesteckt werden. Die Stangen 64 haben unten und oben Gewinde 65 bzw. 66, auf die die Schraubenmuttern 67 bzw. 68 aufgeschraubt werden können. Durch festes Anziehen der Schrauben und bei den in Fig. 1 dargestellten Abdichtungen wird ein dichter Abschluß der Röhre 5 erzielt.

Diese Ausführungsform stellt eine Vereinfachung bezüglich der beiden Deckel 6 und 7 dar, da die Anbringung der Innengewinde in der Röhre 5 der Fig. 1 recht schwierig und kostspielig ist.

Eine andere Weiterbildung der Erfindung, die bei allen Ausführungsbeispielen mit in der Innenröhre liegender Spirale anwendbar ist, besteht darin, im Innern der Spirale einen Glasstab vorzusehen, dessen Außendurchmesser etwas geringer ist als der Innendurchmesser der Spirale. Hierdurch erreicht man eine Verengung des Durchflußquerschnitts für die Luft und damit eine Erhöhung der Durchflußgeschwindigkeit. Die erhöhte Geschwindigkeit bewirkt dann ihrerseits, daß die Ozonrückbildung längs der Ozonröhre verringert wird.

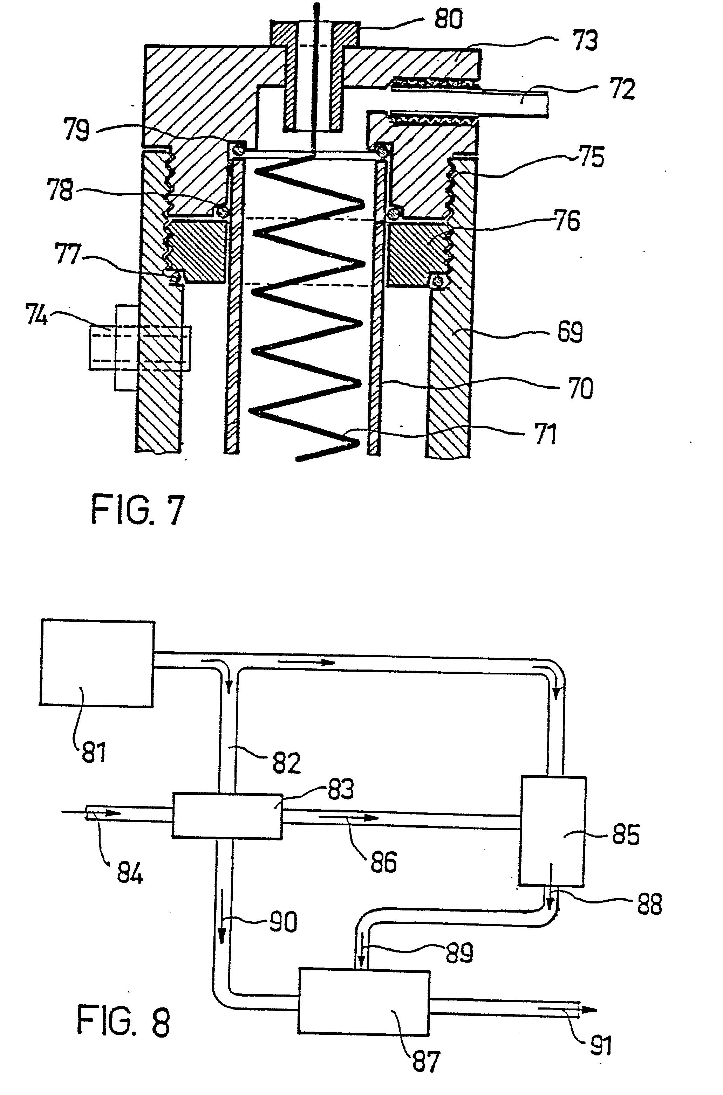

Die Erfindung wurde anhand von einigen Ausführungsbeispielen erläutert. Es ist einleuchtend, daß noch andere Ausführungen im Rahmen des erfinderischen Prinzips möglich sind; insbesondere sind weitere Varianten für den beidseitigen Abschluß der beiden Röhren denkbar. So sei anhand der Fig. 7 ein weiteres vorteilhaftes Beispiel hierfür beschrieben. Da die Weiterbildung nur den Abschluß der beiden Röhren betrifft, ist nur soviel von dem Ozonisator gezeigt, wie zur Erläuterung erforderlich ist. Der Ozonisator besteht auch hier aus der äußeren Röhre 69 aus Edelstahl und der inneren Röhre 70 aus Quarzglas. Die Luft strömt im Inneren der Röhre 70, in der sich die Spirale 71 als Hochspannungselektrode befindet. Die behandelte Luft strömt über den Kunststoffstutzen 72, der in die Kunststoffkappe 73 eingeschraubt ist, zur Versorgungsleitung. Der Metallstutzen 74 dient zum Einlaß des Kühlkörpers.

Die Röhre 69 ist am oberen Ende etwas verjüngt und weist an der Innenwandung das Gewinde 75 auf. In dieses Gewinde 75 ist der zylinderförmige Abschlußring 76 aus Edelstahl eingeschraubt und gegen die Röhre 69 mittels des Abdichtringes 77 abgedichtet. Die Innenwandung des Abschlußdeckels 76 umfaßt die innere Röhre 70 formschlüssig. Über den Abschlußring 76 ist die Abschlußkappe 73 in die Röhre 69 eingeschraubt, und zwar ebenfalls über das Gewinde 75. Die Kappe 73 ist über den Dichtungsring 78 gegen die nasse Seite der Röhre 70 und über den Dichtungsring 79 gegen die Luftseite der Röhre 70 abgedichtet. Die Kappe 73 weist wie in der Fig. 1 eine Durchführung zum Einschrauben der Metallschraube 80 auf, die die elektrische Verbindung zu der Spirale 71 herstellt.

Die Ausbildung des Abschlusses am entgegengesetzten Ende der beiden Röhren 69 und 70 ist analog unter Beachtung des anhand der Fig. 1 gezeigten Unterschiedes zwischen beiden Abschlüssen. Die hier beschriebene Ausführungsform bringt bei bestimmten Größen des Ozonisators fertigungstechnische Vorteile, da die Gewinde 75 und die Gewinde an dem Ring 77 bzw. der Kappe 73 einfach herstellbar sind.

Es erscheint nun zweckmäßig, eine Wasserreinigungsanlage, in der die erfindungsgemäßen Ozonisatoren gemäß den beiden vorstehenden Ausführungsbeispielen einsetzbar sind, kurz zu skizzieren, was anhand der Fig. 8 erfolgt.

Es sei angenommen, daß das Wasser eines Schwimmbeckens gereinigt und entkeimt werden soll. Hierzu wird das Wasser aus dem Schwimmbecken 81 entnommen und zum Teil als Kühlwasser über die Leitung 82 dem Ozonisator 83 zugeleitet. Im Ozonisator 83 wird die von links zugeführte Luft (Pfeil 84) nach einem der oben beschriebenen Verfahren ozonisiert und der Venturipumpe 85 zugeführt (Pfeil 86). In der Venturipumpe 85 wird die ozonisierte Luft dem zu reinigenden Wasser des Schwimmbeckens 81 beigemischt und das Gemisch zum Reaktor 87 geleitet (Pfeile 88 und 89). Dem Reaktor 87 wird ferner das durch die UV-Strahlung entkeimte Kühlwasser zugeführt (Pfeil 90). In dem Reaktor 87 verweilt das Wasser etwa 2 bis 3 Minuten, so daß das Ozon mit den Bakterien und sonstigen Stoffen des Wassers im Sinne einer Reinigung reagieren kann.

Das gereinigte und desinfizierte Wasser wird dann in das Schwimmbecken 81 zurückgeleitet (Pfeil 91). Dieser Kreislauf wird so lange wiederholt, bis das Wasser den erwünschten Reinigungsgrad erreicht hat.

Anstelle der Venturipumpe kann auch ein Kompressor verwendet werden, um das Wasser von dem Schwimmbecken in den Reaktor zu pumpen.

## Patentansprüche

1) Hochfrequenzozonisator zur Ozonisierung von Luft oder Sauerstoff mittels stiller Entladung, bestehend aus zwei konzentrischen, beiderseits offen, jedoch gegeneinander abgedichteten Röhren zur getrennten Durchleitung der Luft bzw. des Sauerstoffs und der Kühlflüssigkeit und aus zwei koaxial und konzentrisch zu den beiden Röhren angeordneten Elektroden, dadurch gekennzeichnet, daß die innere Elektrode als Spirale ausgebildet und mit der Hochspannung verbunden ist und die äußere Röhre als Masseelektrode und Wasser als Kühlmittel dient und daß die innere Röhre aus Quarzglas oder anderem UV-durchlässigem und hitzebeständigem Material besteht.

2) Hochfrequenzozonisator nach Anspruch 1, dadurch gekennzeichnet, daß die spiralförmige Elektrode (2) selbstklemmend im Innern der Innenröhre (1) angeordnet ist und die zu ozonisierende Luft durch die Innenröhre (1) und das Kühlwasser zwischen den beiden Röhren (1) und (5) geführt ist.

3) Hochfrequenzozonisator nach Anspruch 1 und 2, dadurch gekennzeichnet, daß die äußere Röhre (5) durch Deckel (6) und (7) aus elektrisch leitendem Material und elastische UV-beständige O-Ringe (8,9) abgedichtet ist und die Deckel (6,7) Durchlässe für die Innenröhre (1) aufweisen.

4) Hochfrequenzozonisator nach Anspruch 1 - 3, dadurch gekennzeichnet, daß die Innenröhre (1) durch Kappen (12) und (13) aus elektrisch nichtleitendem Material und elastische O-Ringe (14,15 und 16,17) abgedichtet ist und die Kappe (12) einen Kanal (18) für die Zuführung der Luft und die Kappe (13) einen Kanal (20)für die Abführung der Luft sowie eine Durchführung für die Aufnahme einer metallischen Hohlschraube (23), die der Zuleitung der Hochspannung dient, aufweist, und daß schließlich an der äußeren Röhre (5) der Einlaufstutzen (24) und der Auslaufstutzen (25) für die Zu- bzw. Abführung des Kühlwassers vorgesehen sind.

5) Hochfrequenzozonisator nach Anspruch 1, dadurch gekennzeichnet, daß die spiralförmige Elektrode (53) selbstklemmend über die Innenröhre (45) gestülpt ist und das Kühlwasser durch die Innenröhre (45) und die zu ozonisierende Luft zwischen den beiden Röhren (45) und (46) geführt ist.

6) Hochfrequenzozonisator nach Anspruch 5, dadurch gekennzeichnet, daß die beiden konzentrischen Röhren (45) und (46) dicht in die beiden aus elektrisch leitendem Material bestehenden, mit Masse verbundenen Endstücke (47,48) eingelassen sind und die Endstücke (47,48) Kanäle (51,52) für die Zufuhr bzw. Abfuhr des Kühlwassers aufweisen.

7) Hochfrequenzozonisator nach Anspruch 5 und 6, dadurch gekennzeichnet, daß in gewissem Abstand von den Endstücken (49,50) Abstandsscheiben (59,60) am unteren bzw. oberen Ende der beiden Röhren (45,46) angeordnet und diese Abstandsscheiben luft- und wasserdicht mit den Röhren (45,46) verbunden sind.

8) Hochfrequenzozonisator nach einem oder mehreren der vorhergehenden Ansprüche, dadurch gekennzeichnet, daß die äußere Röhre (5,46) ebenfalls aus elektrisch nicht leitendem Material besteht und die Masseelektrode auf deren Außenseite zwischen den Scheiben (59,60) aufgedampft ist.

9) Hochfrequenzozonisator mit einer aus Quarzglas bestehenden Röhre zur Leitung der zu ozonisierenden Luft (Sauerstoff), in welcher eine spiralförmige Hochspannungselektrode selbstklemmend vorgesehen ist, dadurch gekennzeichnet, daß als Masseelektrode eine auf die Außenseite der Quarzglasröhre (26) aufgebrachte Aluminiumschicht (27) dient und daß die Röhre (26) von einem Kühlkörper (28) formschlüssig umfaßt ist.

10) Hochfrequenzozonisator nach Anspruch 9, dadurch gekennzeichnet, daß der Kühlkörper (28) aus zwei Halbschalen (34,35) besteht und die Halbschalen Kühllamellen (36) aufweisen.

11) Hochfrequenzozonisator nach einem oder mehreren der vorhergehenden Ansprüche, dadurch gekennzeichnet, daß die Abschlußdeckel (61,62) quadratisch ausgebildet und in ihren Ecken Löcher (63) vorgesehen sind, durch die Gewindestangen (64) steckbar sind, die mittels Muttern (67,68) so verschraubbar sind, daß die Abschlußdeckel (61,62) dicht auf der Röhre (5) sitzen.

12) Hochfrequenzozonisator nach einem oder mehreren der vorhergehenden Ansprüche, dadurch gekennzeichnet, daß im Innern der Spirale (2,29) ein Glasstab vorgesehen ist, dessen Außendurchmesser etwas länger als der Innendurchmesser der Spirale (2,29) ist.

13) Hochfrequenzozonisator nach einem oder mehreren der vorhergehenden Ansprüche,
dadurch gekennzeichnet, daß die Metallröhre (69) an ihren beiden Enden verjüngt ist und auf dieser Verjüngung ein Innengewinde (75) aufweist, in das zunächst ein Metallring (76) eingeschraubt und mit einem Dichtring (77) gegen den Naßraum zwischen den beiden Röhren (69,70) abgedichtet ist, daß über den Metallring (76) die Kunststoffklappe (73), die eine Öffnung (72) für den Austritt der Luft und eine Öffnung für die metallische Verbindungsschraube (80) aufweist, geschraubt ist und mittels des Dichtungsringes (78) gegen die nasse Seite und mittels des Dichtungsringes (79) gegen die Luftseite des Ozonisators abgedichtet ist.

## Claims

1. High-frequency ozonizer for the ozonization of air or oxygen by means of corona discharge, consisting of two concentric tubes, open at both ends but sealed off against each other, for the separate transport of the air or oxygen and the cooling liquid, and two electrodes arranged coaxially and concentrically relative to the two tubes, characterized by the fact that the inner electrode is designed as a spiral and connected to the high voltage, while the outer tube serves as the earth electrode and water as the coolant, and that the inner tube is made of quartz glass or another UV-permeable, heat-resistant material.

2. High-frequency ozonizer as per claim 1, characterized by the fact that the spiral-shaped electrode (2) is located inside the inner tube (1) in a self-locking manner and that the air to be ozonized is passed through the inner tube (1) and the cooling water between the two tubes (1) and (5).

3. High-frequency ozonizer as per claims 1 and 2, characterized by the fact that the outer tube (5) is sealed off by covers (6) and (7) of electrically conductive material and elastic, UV-resistant O-rings (8, 9), the covers (6, 7) having ducts for the inner tube (1) to pass through.

4. High-frequency ozonizer as per claims 1 to 3, characterized by the fact that the inner tube (1) is sealed by caps (12) and (13) of electrically non-conductive material and elastic O-rings (14, 15 and 16, 17), and that cap (12) has a channel (18) for the supply of air and cap (13) a channel (20) for the discharge of air, as well as a duct to accomodate a hollow metal bolt (23) which serves to supply the high voltage, and that, finally, the inlet socket (24) and the outlet socket (25) for cooling water supply and discharge are provided on the outer tube (5).

5. High-frequency ozonizer as per claim 1, characterized by the fact that the spiral-shaped electrode (53) is fitted over the inner tube (45) in a self-locking manner and the cooling water passes through the inner tube (45), while the air to be ozonized flows between the two tubes (45) and (46).

6. High-frequency ozonizer as per claim 5, characterized by the fact that the two concentric tubes (45) and (46) are tightly embedded in the two end pieces (47, 48), which are made of electrically conductive material and connected to earth, the end pieces (47, 48) having channels (51, 52) for the supply and discharge of the cooling water.

7. High-frequency ozonizer as per claims 5 and 6, characterized by the fact that spacer disks (59, 60) are located at a certain distance from the end pieces (49, 50) at the upper and lower end of the two tubes (45, 46) and that these spacer disks are connected to the tubes (45, 46) in an air and watertight fashion.

8. High-frequency ozonizer as per one or more of the preceding claims, characterized by the fact that the outer tube (5, 46) is also made of electrically non-conductive material and the earth electrode is deposited on its outer side between the disks (59, 60) by vacuum metalization.

9. High-frequency ozonizer with a quartz-glass tube to guide the air (oxygen) to be ozonized, this tube being fitted with a spiral-shaped high-voltage electrode of self-locking design, characterized by the fact that a film of aluminium (27) deposited on the outer side of the quartz-glass tube (26) serves as the earth electrode and that the tube (26) is surrounded by a formfitting heat sink (28).

10. High-frequency ozonizer as per claim 9, characterized by the fact that the heat sink (28) comprises two half-shells (34, 35) and the half-shells are provided with cooling fins (36).

11. High-frequency ozonizer as per one or more of the preceding claims, characterized by the fact that the end covers (61, 62) are of square design and have holes (63) in their corners, through which threaded rods (64) can be inserted which can be screwed on by means of nuts (67, 68) in such a way that the end covers (61, 62) sit tightly on the tube (5).

12. High-frequency ozonizer as per one or more of the preceding claims, characterized by the fact that a glass rod is provided inside the spiral (2, 29), the outside diameter of which is slightly longer than the inside diameter of the spiral (2, 29).

13. High-frequency ozonizer as per one or more of the preceding claims, characterized by the fact that the metal tube (69) is tapered at both ends and has a female thread (75) on this taper, into which a metal ring (76) is first screwed in and sealed off against the wet space between the two tubes (69, 70) by means of a sealing ring (77), and that the plastic cap (73), which has an aperture (72) for discharge of the air and an aperture for the metal connecting screw (80), is screwed on top of the metal ring (76) and sealed off against the wet side of the ozonizer by means of sealing ring (78) and against the air side of the ozonizer by means of sealing ring (79).

## Revendications

1. Ozoniseur de haute fréquence pour l'ozonisation de l'air ou de l'oxygène au moyen d'une décharge silencieuse consistant en deux tubes concentriques, ouverts des deux côtés, mais étanches l'un par rapport à l'autre permettant le passage séparé de l'air et/ou de l'oxygène et du fluide réfrigérant, et en deux électrodes coaxiales et concentriques par rapport aux deux tubes. L'électrode intérieure se présentant sous forme de spirale et étant reliée à la haute tension, le tube extérieur servant d'électrode de masse et l'eau de fluide réfrigérant ainsi que le tube intérieur en verre quartzeux ou en tout autre matériau perméable aux UV et résistant aux températures élevées.

2. Ozoniseur de haute fréquence selon spécification 1, qui se distingue par une électrode spiralée (2) à auto-serrage à l'intérieur du tube intérieur (1) qui fait passer l'air à ozoniser à travers le tube intérieur (1) et l'eau de refroidissement entre les deux tubes (1) et (5).

3. Ozoniseur de haute fréquence selon spécification 1 et 2, qui se distingue par un tube extérieur (5) étanchéifié par des couvercles (6) et (7) en matériau conducteur d'électricité et par des rondelles toriques (8, 9) élastiques résistantes aux UV. Les couvercles (6, 7) sont dotés de passages pour le tube intérieur (1).

4. Ozoniseur de haute fréquence selon spécifications 1–3, qui se distingue par l'étanchéification en matériau électriquement non conducteur du tube intérieur (1) et par des rondelles toriques élastiques (14, 15 et 16, 17). Le capuchon (13) étant destiné à évacuer l'air et une traversée devant recevoir une vis métallique creuse (23), destinée à l'alimentation en haute tension. Par ailleurs le manchon d'introduction (24) et le manchon de sortie (25) adaptés sur le tube extérieur (5) sert à l'amenée et à l'évacuation de l'eau de refroidissement.

5. Ozoniseur de haute fréquence selon spécification 1, qui se distingue par une électrode spiralée (53) à auto-fixation emboutie par retournement au-dessus du tube intérieur (45) et l'amenée de l'eau de refroidissement par le tube intérieur (45), l'air à ozoniser passant entre les deux tubes (45) et (46).

6. Ozoniseur de haute fréquence selon spécification 5, qui se distingue par le scellement étanche des deux tubes concentriques (45) et (46) dans un matériau électriquement conducteur, les embouts (47, 48) étant reliés par la masse et les embouts (47, 48) présentant des canaux (51, 52) pour l'amenée et l'évacuation de l'eau de refroidissement.

7. Ozoniseur de haute fréquence selon spécifications 5 et 6, qui se distingue par la disposition à un certain intervalle par rapport aux embouts (49, 50) d'entretoises (59, 60) à l'extrémité inférieure et supérieure des deux tubes (45, 46) et de l'association des entretoises de façon étanche à l'air et à l'eau par les tubes (45, 46).

8. Ozoniseur de haute fréquence selon une ou plusieurs spécifications ci-dessus qui se distingue également par le matériau électriquement non conducteur du tube extérieur (5, 46) et par la métallisation sous vide de l'électrode de masse sur sa face externe entre les disques (59, 60).

9. Ozoniseur de haute fréquence avec un tube en verre de quartz pour la transmission de l'air (de l'oxygène) à ozoniser, dans lequel plonge une électrode spiralée de haute tension à auto-fixation, se distingant par le recours à une couche d'aluminium (27) adaptée sur la face externe du tube en verre à quartz (26) et par l'enrobage totalement capsulé du tube (26) par un corps de refroidissement (28).

10. Ozoniseur de haute fréquence selon exigence 9, se distingant par un corps de refroidissement (28) consistant en deux demi-sphères (34, 35) qui comportent des lamelles de refroidissement (36).

11. Ozoniseur de haute fréquence selon une ou plusieurs exigences ci-dessus, se distingant par des couvercles de fermeture (61, 62) de forme carré dans les coins desquels sont ménagés des trous (63), qui permettent le passage de tiges filetées (64), coins qui sont susceptibles d'être vissés de façon à agencer les couvercles (61, 62) de manière étanche sur le tube (5).

12. Ozoniseur de haute fréquence selon une ou plusieurs exigences ci-dessus, se distingant par la présence d'une tige en verre à l'intérieur de la spirale (2, 29), tige dont le diamètre extérieur est légèrement plus long que le diamètre intérieur de la spirale (2, 29).

13. Ozoniseur de haute fréquence selon une ou plusieurs exigences ci-dessus, se distingant par une tige métallique (69) s'effilant à ses deux extrémités et dont les rétrécissements sont dotés d'un taraudage (75), dans lequel vient tout d'abord se visser une bague métallique (76) et qui sont étanchéifiés par rapport à la zone humide entre les deux tubes (69, 70) et dont la bague métallique (76) qui y est vissée comporte un clapet en matière plastique (73) qui assure l'évacuation de l'air (72) et une ouverture pour la vis de jonction métallique (80). L'étanchéité est assurée par rapport à la zone humide au moyen du joint (78) et par rapport à la zone à air de l'ozoniseur au moyen du joint (79).

FIG.1

FIG. 2

FIG. 3    (35)

FIG. 4

FIG. 5

FIG. 6

FIG. 7

FIG. 8